Europäisches Patentamt

European Patent Office

Office européen des brevets

(19)

(11) **EP 1 503 554 A1**

(12) **EUROPÄISCHE PATENTANMELDUNG**

(43) Veröffentlichungstag:
**02.02.2005 Patentblatt 2005/05**

(51) Int Cl.7: **H04L 25/03**, H04L 25/02

(21) Anmeldenummer: **03017077.3**

(22) Anmeldetag: **28.07.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **SIEMENS AKTIENGESELLSCHAFT
80333 München (DE)**

(72) Erfinder:
• **Frey, Thomas, Dr.
89081 Ulm (DE)**
• **Kiessling, Mario
89075 Ulm (DE)**
• **Reinhardt, Markus, Dr.
89231 Neu-Ulm (DE)**
• **Viering, Ingo
89075 Ulm (DE)**

(54) **Verfahren zur Vorfilterung einer Trainingssequenz in einem Funkkommunikationssystem**

(57)  Die Erfindung betrifft ein Verfahren zur Vorfilterung einer Trainingssequenz in einem Funkkommunikationssystem, bei dem zumindest sendeseitig eine aus mehreren Antennensystemen bestehende Antennenanordnung verwendet wird. Dabei werden die Trainingssequenzen über ein Vorfilter den sendeseitigen Antennensystemen zur Abstrahlung zugeführt. Anhand der Trainingssequenzen wird eine Schätzung zur Bildung von Funkübertragungskanaleigenschaften, die durch räumliche Korrelationen beschrieben werden, durchgeführt. Das Vorfilter wird in Abhängigkeit der Korrelationen derart dimensioniert, dass ein Fehlerwert eines empfangsseitig zur Kanalschätzung verwendeten Algorithmus minimiert wird.

EP 1 503 554 A1

## EP 1 503 554 A1

**Beschreibung**

Die Erfindung betrifft ein Verfahren zur Vorfilterung von Trainingssequenzen in einem Funkkommunikationssystem, bei dem zumindest sendeseitig eine aus mehreren Antennensystemen bestehende Antennenanordnung verwendet wird.

Bei Funkkommunikationssystemen, wie beispielsweise bei Mobilfunksystemen, werden zur Steigerung einer Datenübertragungskapazität sowohl sendeseitig als auch empfangsseitig jeweils aus mehreren Antennensystemen bestehende Antennenanordnungen verwendet. Derartige Funkkommunikationssysteme werden als sogenannte "Multiple Input Multiple Output", kurz "MIMO", Funkkommunikationssysteme bezeichnet.

Mit Hilfe spezieller Signalverarbeitungsalgorithmen wird ein digitaler Eingangsdatenstrom in Teildatenströme aufgeteilt und über die sendeseitigen Antennensysteme abgestrahlt. Aufgrund der räumlich angeordneten Antennensysteme sind räumliche Funkkanalkoeffizienten ableitbar, die Eigenschaften von Funkübertragungskanälen repräsentieren. Die Funkkanalkoeffizienten beschreiben beispielsweise einen Signalschwund (Fading), eine spezifische Ausbreitung, eine Dämpfung, Störungen, usw., im Funkübertragungskanal.

Die Funkkanalkoeffizienten werden beispielsweise sendeseitig für die Vorfilterung der Teildatenströme verwendet, um diese im Hinblick auf einen erhöhten Datendurchsatz oder im Hinblick auf eine erhöhte Übertragungsqualität optimal an die Funkübertragung anzupassen. Beispielsweise wird durch die Vorfilterung für jeden Teildatenstrom eine individuelle Sendeleistungsanpassung und/oder eine individuelle Modulation durchgeführt.

Die Funkkanalkoeffizienten sind bei einem MIMO-Funkkommunikationssystem nur sehr aufwändig mit Hilfe einer Kanalschätzung zu ermitteln. So ergeben sich bei einer Anzahl von $M_{TX}$ Sendeantennen und bei einer Anzahl von $M_{RX}$ Empfangsantennen insgesamt $M_{RX} \times M_{TX}$ zu schätzende Funkkanalkoeffizienten für $M_{RX} \times M_{TX}$ Funkübertragungskanäle. Konkret ergeben sich für ein MIMO-Funkkommunikationssystem mit vier Sende- und mit vier Empfangsantennensystemen insgesamt 16 Funkübertragungskanäle, die durch 16 Funkkanalkoeffizienten beschrieben werden.

Eine genaue Schätzung der Funkkanalkoeffizienten bedingt insbesondere bei einem FDD-Funkkommunikationssytem ("Frequency Division Duplex", FDD) Trainingssequenzen großer Länge, die wiederum eine beträchtliche Anzahl von Funkübertragungsressourcen belegen.

Es ist deshalb Aufgabe der Erfindung, in einem Funkkommunikationssystem, insbesondere in einem MIMO-Funkkommunikationssystem, eine aufwandsarme bzw. eine bezüglich der Genauigkeit verbesserte Schätzung von Funkkanalkoeffizienten zu realisieren.

Die Aufgabe der Erfindung wird durch die Merkmale des Patentanspruchs 1 gelöst. Vorteilhafte Weiterbildungen sind in den Unteransprüchen angegeben.

Ein erfindungsgemäße Vorfilter wird sendeseitig vor einer Antennenanordnung derart angeordnet, dass Trainingssequenzen über das Vorfilter an Antennensysteme der Antennenanordnung zur Abstrahlung zugeführt werden. Anhand der Trainingssequenzen erfolgt eine Kanalschätzung zur Ermittlung von Funkübertragungskanaleigenschaften, die durch räumliche Korrelationen beschrieben werden. Das Vorfilter wird in Abhängigkeit der räumlichen Korrelationen derart dimensioniert, dass ein vorgegebener Fehlerwert eines empfangsseitig zur Kanalschätzung verwendeten Algorithmus erzielt wird.

Dieser empfangsseitige Fehlerwert ist beispielsweise als zu minimierender Fehlerwert vorgegeben oder es soll ein vorgegebener Fehlerwert mittels einer Variation der Länge der Trainingssequenzen erzielt werden.

Die Funkübertragungskanaleigenschaften werden empfangsseitig mit Hilfe der Trainingssequenzen geschätzt und an die Sendeseite zur Dimensionierung des Vorfilters übermittelt. Dies ist beispielsweise dann der Fall, wenn in Aufwärtsrichtung (Uplink) und in Abwärtsrichtung (Downlink) verschiedene Trägerfrequenzen zur Funkübertragung verwendet werden.

Oder aber die Funkübertragungskanaleigenschaften werden sendeseitig in Abhängigkeit von einem verwendeten Übertragungsverfahren bestimmt. Dies ist beispielsweise dann der Fall, wenn in Aufwärtsrichtung (Uplink) von einer Mobilstation zu einer Basisstation und in Abwärtsrichtung (Downlink) von einer Basisstation zu einer Mobilstation verschiedene Zeitschlitze einer Trägerfrequenz zur Funkübertragung verwendet werden. Da sich in diesem Fall die Funkübertragungskanaleigenschaften in Aufwärtsrichtung und in Abwärtsrichtung im wesentlichen nicht unterscheiden, sind die Funkübertragungskanaleigenschaften seitens der Basisstation aus der Aufwärtsrichtung direkt bestimmbar und stehen somit sendeseitig an der Basisstation unmittelbar zur Verfügung.

Durch das erfindungsgemäß gestaltete Vorfilter wird im Vergleich zu einem Funkkommunikationssystem ohne Vorfilterung eine Verbesserung der Kanalschätzung erzielt. Insbesondere bei einem empfangsseitig verwendeten Algorithmus zur Bildung eines mittleren quadratischen Fehlerwerts ("Mean Squared Error"), kurz MSE-Algorithmus, wird die Verbesserung in Hinsicht auf den mittleren quadratischen Fehler erzielt. Weiterhin wird eine Verwendung von verkürzten Trainingssequenzen unter Einhaltung eines vorgegebenen Fehlerwerts ermöglicht.

Dadurch, dass mit Hilfe des erfindungsgemäßen Vorfilters die Trainingssequenzen bei einem vorgegebenen Fehlerwert verkürzt werden können, werden Funkübertragungsressourcen eingespart, die vorteilhaft für eine Nutzdatenübertragung ("Payload") zur Verfügung stehen.

Die Schätzung der Funkkanalkoeffizienten wird im Aufwand reduziert und vereinfacht, da einerseits zur Vorfilterung bzw. zur Kanalschätzung lediglich statische, langzeitstabile Informationen bezüglich der räumlichen Korrelationsverhältnisse für jeden Funkübertragungskanal bzw. für jedes Antennensystem verwendet werden. Andererseits werden durch Verwendung von verkürzten Trainingssequenzen die zur Kanalschätzung durchzuführenden Berechnungen im Aufwand reduziert.

Die Dimensionierung des Vorfilters ist aufgrund der lediglich langsam erfolgenden Änderung der Funkkanalkoeffizienten besonders vorteilhaft nur in größeren Zeitabständen durchzuführen.

Bei der Schätzung der Funkkanalkoeffizienten werden Einflüsse auf den Funkübertragungskanal, wie beispielsweise Schwund ("Fading"), berücksichtigt.

Das erfindungsgemäße Verfahren zur Vorfilterung ist neben den MIMO-Funkkommunikationssystemen auch bei so genannten "Multiple-Input-Single-Output", kurz "MISO", Funkkommunikationssystemen einsetzbar.

Bei einem MISO-Funkkommunikationssystem werden sendeseitig eine Vielzahl von Sendeantennensystemen, die gegebenenfalls als intelligente Antennenanordnung, auch bekannt als "Smart Antenna", betrieben werden, verwendet, während empfangsseitig lediglich ein einzelnes Antennensystem angeordnet ist.

Das erfindungsgemäße Verfahren verwendet vorteilhaft die Erkenntnis, dass bei einer typischen Freiraumausbreitung die Funkübertragungskanäle bzw. die den Funkübertragungskanälen jeweils zugeordneten Sende- bzw. Empfangsantennensysteme zueinander räumlich korreliert sind. Dabei sind insbesondere bei einer direkten freien Sichtverbindung ("Line of Sight") die Funkkanalkoeffizienten genau zu bestimmen, da sie sich lediglich über einen längeren Beobachtungszeitraum ändern.

Zum besseren Verständnis der Erfindung wird nachfolgend ein typisches MIMO-Funkkommunikationssystem in allgemeiner Form beispielhaft dargestellt.

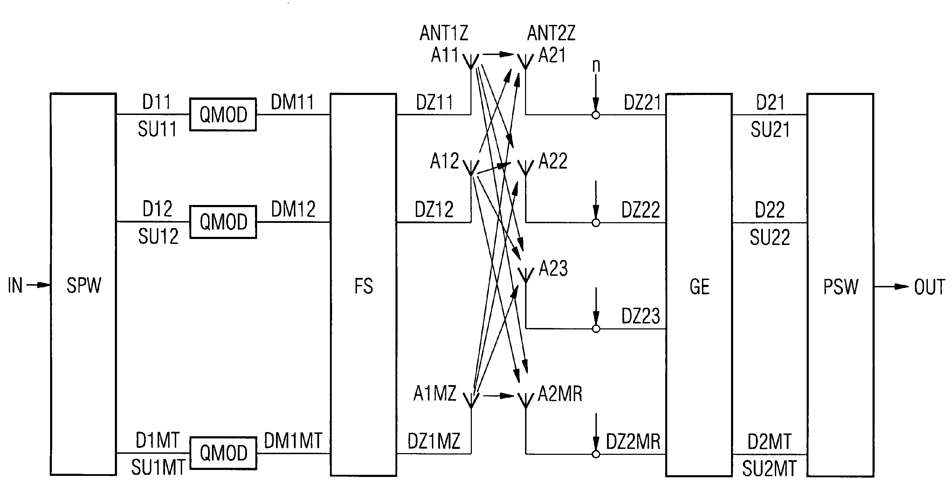

FIG 1 zeigt ein Blockschaltbild eines MIMO-Funkkommunikationssystems. Ein digitales Eingangssignal IN, das seriell aufeinanderfolgende Bits aufweist, gelangt sendeseitig an einen Seriell/Parallel-Wandler SPW, mit dessen Hilfe das Eingangssignal IN in insgesamt MT Datenfolgen D11, D12, ..., D1MT für MT sendeseitige Subkanäle SU11, SU12, ..., SU1MT aufgeteilt wird. Jeder einzelne der MT sendeseitigen Subkanäle SU11 bis SU1MT weist zur Modulation der einzelnen Datenfolgen D11 bis D1MT jeweils einen Modulator QMOD auf, wobei hier die Datenfolgen D11 bis D1MT mit Hilfe eines identischen Modulationsverfahrens moduliert werden.

Modulierte Datenfolgen DM11, DM12, ..., DM1MT gelangen über ein Vorfilter FS zur Abstrahlung an eine sendeseitige Antenneneinrichtung ANT1Z, die insgesamt MZ einzelne Antennensysteme A11, A12, ..., A1MZ aufweist. Mit Hilfe einer empfangsseitigen Antenneneinrichtung ANT2Z, die insgesamt MR einzelne Antennensysteme A21, A22, ..., A2MR aufweist, werden MR Datenfolgen DZ21, DZ22, ..., DZ2MR empfangen. Diese weisen jeweils einen Rauschanteil auf, der durch einen Rauschvektor n dargestellt ist.

Die MR Datenfolgen DZ21 bis DZ2MR gelangen an ein Matrixfilter GE, das MT Datenfolgen D21, D22, ..., D2MT für MT empfangsseitige Subkanäle SU21, SU22, ..., SU2MT bildet. Die Datenfolgen D21 bis D2MT gelangen an einen Parallel/Seriell-Wandler PSW, der ein Ausgangssignal OUT mit seriell aufeinanderfolgenden Bits bildet. Die Eigenschaften der Übertragungskanäle sind als Funkkanalkoeffizienten in einer Matrix zusammenfassbar.

Im Folgenden wird die erfindungsgemäße Vorfilterung beispielhaft für einen empfangsseitig eingesetzten Algorithmus zur Bildung eines minimalen mittleren quadratischen Fehlerwerts ("Minimum Mean Squared Error"), kurz MMSE-Algorithmus, hergeleitet.

Es wird vorausgesetzt, dass die sendeseitigen Trainingssequenzen orthogonal zueinander dem sendeseitigen Vorfilter zur Vorverarbeitung zugeführt werden.

Nachfolgend gelten folgende Abkürzungen:

| | |
|---|---|
| I | bezeichnet eine Einheitsmatrix, |
| $M^*$ | bezeichnet eine konjugiert komplexe Matrix M, |
| $M^T$ | bezeichnet eine transponierte Matrix M, |
| $M^H$ | bezeichnet eine konjugiert transponierte Matrix M (hermitesche Matrix), |
| $[M]_{ij}$ | bezeichnet ein Element einer Zeile i und einer Spalte j einer Matrix M, |
| vec(M) | bildet aus Spalten einer Matrix M einen Vektor |
| $\otimes$ | bezeichnet ein Kronecker Produkt, und |
| $diag(M)=diag(M)^T$ | bildet eine Diagonalmatrix mit Elementen x auf der Diagonalen. |

Beim MIMO-Funkkommunikationssystem wird eine Übertragung einer Trainingssequenz über einen Funkübertragungskanal mit weißem Rauschen am Empfänger modelliert durch:

$$Y = R_{\tilde{n}\tilde{n}}^{-0,5} \, HFS + R_{\tilde{n}\tilde{n}}^{-0,5} \, \tilde{N} = R_{\tilde{n}\tilde{n}}^{-0,5} \, HFS + N$$

Gleichung (1)

mit:

$N_t$ als Trainingssequenzlänge,
$M_{Tx}$ als Anzahl der sendeseitigen Antennensysteme,
$M_{Rx}$ als Anzahl der empfangsseitigen Antennensysteme,
S als sendeseitige Trainingssequenzmatrix der Größe $M_{Tx}$ x $N_t$,
F als lineare Matrix des sendeseitigen Vorfilters, Größe $M_{TX}$ x $M_{TX}$,
H als Funkübertragungskanalmatrix mit korrelierten Funkkanalkoeffizienten, Größe $M_{TX}$ x $M_{RX}$,
Ñ als gemessene empfangsseitige Rauschmatrix vor einem "Noise-Whitening"-Rauschfilter, Größe $M_{Rx}$ x $N_t$,
N als empfangsseitige Rauschmatrix mit weißem Rauschen nach dem "Noise Whitening"-Rauschfilter, Größe $M_{Rx}$ x $N_t$,
$R_{\tilde{n}\tilde{n}}$ als geschätzte Rauschkovarianzmatrix gemäß Gleichung (5),
Y als gemessene, verrauschte, empfangsseitige Trainingssequenzmatrix, Größe $M_{Rx}$ x $N_t$.

Bei orthogonalen Trainingssequenzen erfüllt die sendeseitige Trainingssequenzmatrix S folgende Bedingung einer diskreten Fourriertransformations-Matrix, kurz DFT-Matrix:

$$SS^H = S^H S = N_t \cdot I$$

Gleichung (2)

Zerlegt man die Rauschmatrix Ñ in Spaltenvektoren mit:

$$\tilde{N} = [\tilde{n}_1, ..., \tilde{n}_{N_t}]$$

Gleichung (3),

so ergibt sich die in Gleichung (1) genannnte Rauschkovarianzmatrix $R_{\tilde{n}\tilde{n}}$ als Erwartungswert E mit $1 \le i \le N_t$ zu:

$$R_{\tilde{n}\tilde{n}} = E\left[\tilde{n}_i \tilde{n}_i^H\right]$$

Gleichung (4)

Die Kovarianzmatrix der Spalten der in Gleichung (1) genannten Rauschmatrix N nimmt für weißes gauß'sches Rauschen den Wert der Einheitsmatrix I an.
Im Folgenden wird eine Schätzung der Funkkanalkoeffizienten unter Verwendung des empfangsseitigen MMSE-Algorithmus und unter Verwendung des als bekannt vorausgesetzten Vorfilters betrachtet.
Dazu wird Gleichung (4) in Vektor-Schreibweise umgeformt:

$$\underbrace{vec(Y)}_{y} = (\underbrace{(FS)^T \otimes R_{\tilde{n}\tilde{n}}^{-0,5}}_{X}) \cdot \underbrace{vec(H)}_{h} + \underbrace{vec(N)}_{n}$$

$$y = X \cdot h + n$$

Gleichung (5),

mit h, n, y als Spaltenvektoren.

Besitzen die Spaltenvektoren h, n die Kovarianzmatrizen $R_{hh}$ und $R_{nn}$ , so wird eine lineare MMSE-Kanalschätzung des Spaltenvektors h entsprechend einer aus der Druckschrift "Fundamentals of statistical signal processing volume 1 (estimation theory), Kay S. M., Prentice Hall, 1993, bekannten Gleichung durchgeführt.

Man erhält als Schätzwert für den Spaltenvektor h:

$$\hat{h} = (R_{hh}^{-1} + X^H R_{nn}^{-1} X)^{-1} X^H R_{nn}^{-1} y$$

Gleichung (6)

mit $R_{hh}$ als Kovarianzmatrix des Spaltenvektors h und mit $R_{nn}$ als Kovarianzmatrix des Spaltenvektors n.

Wie nachfolgend gezeigt wird, ist die Matrix X eine Funktion der Kovarianzmatrix $R_{hh}$. Bei weißem Rauschen entspricht die dem Spaltenvektor n zugeordnete Kovarianzmatrix $R_{nn}$ der Einheitsmatrix I.

Aus der Druckschrift "Fading correlation and its effect on the capacity of multielement antenna systems", Shiu, Foschini, Gans, Kahn, *IEEE Transactions on Communications,* vol. 48, no.3, pp.502-513, March 2000, ist ein vereinfachtes Modell eines korrelierten MIMO-Funkübertragungskanals bekannt.

Dabei gilt beispielsweise für eine sowohl sendeseitige als auch empfangsseitige Korrelation von Antennensystemen bzw. von Funkübertragungskanälen für die Funkübertragungskanalmatrix H:

$$H = A^H H_w B$$

Gleichung (7)

$$AA^H = R_{Rx}$$

Gleichung (8)

$$BB^H = R_{Tx}$$

Gleichung (9)

mit:

$AA^H$    als Matrizenwurzel, definiert über $R_{Rx}$,

$BB^H$    als Matrizenwurzel, definiert über $R_{Tx}$,

$H_w$    als komplexe Funkübertragungskanal-Matrix mit gauß'schen Variablen einer Einheitsvarianz, Größe $M_{Rx} \times M_{Tx}$,

$H$    als Funkübertragungskanalmatrix mit korrelierten Funkkanalkoeffizienten, Größe $M_{TX} \times M_{RX}$,

$R_{Rx}$    als normierte empfangsseitige langzeitstabile Korrelationsmatrix mit Funkkanalkoeffizienten, Größe $M_{Rx} \times M_{Rx}$, und mit

$R_{Tx}$    als normierte sendeseitige langzeitstabile Korrelationsmatrix mit Funkkanalkoeffizienten, Größe $M_{Tx} \times M_{Tx}$,

Unter Verwendung des oben genannten Kanalmodels folgt:

$$R_{hh} = R_{Tx}^{*} \otimes R_{Rx}$$

Gleichung (10)

Mit dem gegebenen Kanalmodell wird ein mittlerer quadratischer Fehlerwert ε ("Mean Squared Error", MSE) abgeleitet:

$$\varepsilon = tr((R_{Tx}^*)^{-1} \otimes R_{Rx}^{-1} + N_t(F^*F^T \otimes R_{\tilde{n}\tilde{n}}^{-1}))^{-1}$$

Gleichung (11)

Dabei wurde Spur (bzw. "Trace") mit "tr" abgekürzt.

Unter der Voraussetzung, dass sendeseitig bzw. empfangsseitig statistische Informationen über Funkkanalkoeffizienten vorliegen, die in Gleichung (11) mit $R_{Tx}$ bzw. $R_{Rx}$ berücksichtigt werden, ist ein entsprechender Entwurf eines linearen Vorfilters F unter Berücksichtigung eines minimalen Fehlers ε durchführbar.

Nachfolgend wird eine additive Überlagerung mit weißem gauß'schen Rauschen am Empfänger betrachtet und eine geschlossene Lösung für den MMSE-Algorithmus abgeleitet.

Es gilt:

$$R_{\tilde{n}\tilde{n}} = N_0 \cdot I$$

Gleichung (12),

mit $N_0$ als Rauschleistung.

Daraus ergibt sich der Fehlerwert ε zu:

$$\varepsilon = tr((R_{Tx}^*)^{-1} \otimes R_{Rx}^{-1} + \frac{N_t}{N_0}(F^*F^T \otimes I))^{-1}$$

Gleichung (13).

Basierend auf dieser Gleichung wird nachfolgend das erfindungsgemäße Vorfilter für verschiedene Ausbreitungsszenarien entworfen.

Dabei wird einerseits durch die sendeseitige Vorfilterung, bzw. durch die optimale Anpassung der Trainingssequenzen an den Funkübertragungskanal, eine verbesserte Schätzung der Funkkanalkoeffizienten ermöglicht und andererseits wird bei einem vorgegebenen Fehlerwert ε eine Verkürzung der sendeseitigen Trainingssequenzen ermöglicht.

Nachfolgend werden Eigenwert-Zerlegungen mit Eigenwerten $\Lambda_{Rx}$ und $\Lambda_{Tx}$ durchgeführt. Es gilt:

$$R_{Rx} = V_{Rx} \Lambda_{Rx} V_{Rx}^H$$

$$R_{Tx}^* = V_{Tx} \Lambda_{Tx} V_{Tx}^H$$

Gleichung (14)

mit

$R_{Rx}$     als empfangsseitige Korrelationsmatrix,
$R_{Tx}$     als sendeseitige Korrelationsmatrix,
$V_{Rx}$     als Eigenvektoren ($v_{R1}$, $v_{R2}$, ..., $v_{R,MRx}$) der empfangsseitigen Korrelationsmatrix $R_{Rx}$,
$V_{Tx}$     als Eigenvektoren ($v_{T1}$, $v_{T2}$, ... , $v_{Tx,MTx}$) der sendeseitigen Korrelationsmatrix $R_{Tx}$.
$\Lambda_{Rx}$     als Eigenwerte ($\Lambda_{R1}$, $\Lambda_{R2}$, ..., $\Lambda_{R,MRx}$) der empfangsseitigen Korrelationsmatrix $R_{Rx}$, und mit
$\Lambda_{Tx}$     als Eigenwerte ($\Lambda_{T1}$, $\Lambda_{T2}$, .., $\Lambda_{T,MTx}$) der sendeseitigen Korrelationsmatrix $R_{Tx}$.

Ein Eigenwert $\Lambda_{Ti}$ (i=1, ..., $M_{Tx}$) mit zugeordnetem Eigenvektor $V_{Ti}$ (i=1, ... , $M_{Tx}$) ist als so genannter "Langzeit-Eigenmode" des Funkübertragungskanals zu bezeichnen, da hier Langzeiteigenschaften bezüglich der Korrelation beschrieben sind. Ein großer Eigenwert bezüglich einer mittleren zu übertragenden Leistung kennzeichnet somit einen starken Eigenmode.

Die sendeseitige Trainingssequenzmatrix S und die sendeseitigen Eigenvektoren $V_{Tx}$ sind jeweils zeilenweise beschreibbar durch:

$$S = \begin{bmatrix} s_1 \\ s_2 \\ \vdots \\ s_{M_{Tx}} \end{bmatrix} \quad V_{TX}^* = \begin{bmatrix} v_1 & v_2 & & v_{M_{TX}} \end{bmatrix}$$

Gleichung (15)

Das erfindungsgemäße Vorfilter wird beschrieben durch:

$$F^* = V_{Tx}\Phi_f$$

Gleichung (16)

mit $\Phi_f$ als Diagonalmatrix, durch die Sendeleistungen zu den Eigenmoden bzw. zu den zu übertragenden Trainingssequenzen zugeordnet werden.

Somit gilt für die Vorfilterung der Trainingssequenzen:

$$F \cdot S = V_{Tx}^* \Phi_f S$$

Gleichung (17)

Diese Gleichung beschreibt einerseits eine Leistungszuordnung zu den Trainingssequenzen, die mit Hilfe des Vektors $\Phi_f$ durchgeführt wird, und andererseits ein Beamforming, das an den Trainingssequenzen mit Hilfe der Eigenvektoren $V_{Tx}^*$ der sendeseitigen Korrelationsmatrix $R_{Tx}$ durchgeführt wird.

Für eine Trainingssequenz $s_k$ wird eine Folge von in einer Matrix $T_k$ gegebenen Sendevektoren über die Sendeantennen abgestrahlt. Es gilt:

$$T_k = \Phi_k V_k S_k$$

für alle k.

Gleichung 18

Gleichung (18) ist interpretierbar als Beamforming von einer Trainingssequenz $s_k$ mit einem Eigenvektor $v_k$, wobei der Trainingssequenz $s_k$ eine Leistung $\Phi_k$ zugeordnet wird.

Aus Gleichung (13) ergibt sich für den Fehlerwert $\varepsilon$:

$$\varepsilon = tr(\Lambda_{Tx}^{-1} \otimes \Lambda_{Rx}^{-1} + \frac{N_t}{N_0} (V_{Tx}^H F^* F^T V_{Tx} \otimes I))^{-1}$$

Gleichung (19)

Mit der Diagonalmatrix $\Phi_f$ zur Sendeleistungszuordnung ergibt sich für den Fehlerwert $\varepsilon$:

$$\varepsilon = tr(\Lambda_{Tx}^{-1} \otimes \Lambda_{Rx}^{-1} + \frac{N_t}{N_0}\,(\Phi_f\Phi_f^H \otimes I))^{-1}$$

Gleichung (20)

Nachfolgend wird in einem ersten Ausführungsbeispiel sowohl eine empfangsseitige als auch eine sendeseitige Korrelation der Antennensysteme bzw. der Funkübertragungskanäle betrachtet.

Eine Minimierung des Fehlerwerts $\varepsilon$ us Gleichung (20) wird mit Hilfe des sendeseitigen Vorfilters durchgeführt. Unter der Voraussetzung einer Leistungsbeschränkung folgt als Optimierungsproblem:

$$\min_{\Phi_f}\,tr\,(\Lambda_{Tx}^{-1} \otimes \Lambda_{Rx}^{-1} + \frac{N_t}{N_0}(\Phi_f\Phi_f^H \otimes I))^{-1}$$

(Gleichung 21),

wobei die Nebenbedingung der Leistungsbeschränkung bestimmt ist durch $\rho$ mit:

$$\rho = \sum_{l=0}^{M_{Tx}} \Phi_{f,l}^2$$

Gleichung (22)

Die Minimierung des Fehlerwerts erfolgt unter Beachtung der Nebenbedingung durch numerische Berechnungs- und Optimierungsverfahren.

Nachfolgend wird in einem zweiten Ausführungsbeispiel eine lediglich sendeseitige Korrelation der Antennensysteme bzw. der Funkübertragungskanäle betrachtet. Dieses Beispiel beschreibt ein typisches Szenario in einem zellularen Funkkommunikationssystem mit einer freistehenden Sendeantennenanordnung.

In Matrix-Schreibweise folgt für Elemente der Diagonalmatrix $\Phi_f$ :

$$\Phi_f = \left[\frac{1}{M_{Tx}}((\frac{N_t}{N_0})^{-1}\,tr(\Lambda_{Tx}^{-1})+\rho)\cdot I - (\frac{N_t}{N_0})^{-1}\Lambda_{Tx}^{-1}\right]^{0,5}$$

Gleichung (23)

mit der Nebenbedingung, dass alle Elemente der Diagonalmatrix $\Phi_f$ größer als 0 sind. Dies kann beispielsweise mit einem iterativen Verfahren sichergestellt werden.

Nachfolgend wird in einem dritten Ausführungsbeispiel eine lediglich empfangsseitige Korrelation von Antenennsystemen betrachtet.

Es ergibt sich, dass alle Elemente der Diagonalmatrix $\Phi_f$ größengleich sind. Es gilt:

$$\Phi_f = \rho\,/\,M_{Tx}\,I$$

Gleichung (24)

In diesem Spezialfall findet lediglich eine ungerichtete Übertragung ohne Beamforming statt.

**Patentansprüche**

1. Verfahren zur Vorfilterung von Trainingssequenzen in einem Funkkommunikationssystem, bei dem zumindest sendeseitig eine aus mehreren Antennensystemen bestehende Antennenanordnung verwendet wird,

   - bei dem die Trainingssequenzen über ein Vorfilter den sendeseitigen Antennensystemen zur Abstrahlung zugeführt werden,
   - bei dem anhand empfangener Trainingssequenzen eine Kanalschätzung von Funkübertragungskanaleigenschaften, die durch räumliche Korrelationen beschrieben werden, durchgeführt wird, und
   - bei dem das Vorfilter in Abhängigkeit der räumlichen Korrelationen dimensioniert wird.

2. Verfahren nach Anspruch 1, bei dem das Vorfilter in Abhängigkeit der räumlichen Korrelationen derart dimensioniert wird, dass ein vorgegebener Fehlerwert eines zur Kanalschätzung verwendeten Algorithmus erreicht wird.

3. Verfahren nach Anspruch 2, bei dem der empfangsseitige Fehlerwert als Minimalwert bei einer vorgegebenen Trainingssequenzlänge vorgegeben wird oder bei dem der vorgegebene Fehlerwert mittels einer Anpassung der Länge der Trainingssequenzen erreicht wird.

4. Verfahren nach einem der vorhergehenden Ansprüche, bei dem empfangsseitig ein MSE-Algorithmus zur Kanalschätzung verwendet wird.

5. Verfahren nach einem der vorhergehenden Ansprüche, bei dem durch das Vorfilter für jede Trainingssequenz ein Beamforming-Verfahren durchgeführt wird, indem durch das Vorfilter sowohl eine Leistungszuordnung als auch eine Antennensystemzuordnung zur Trainingssequenz erfolgt.

6. Verfahren nach einem der vorhergehenden Ansprüche, bei dem durch das Vorfilter die Trainingssequenzen an die Funkübertragungskanaleigenschaften angepasst werden.

7. Verfahren nach einem der vorhergehenden Ansprüche, bei dem die Vorfilterung der Trainingssequenzen anhand folgender Gleichung durchgeführt wird:

$$F \cdot S = V_{Tx}^{*} \Phi_f S$$

   mit:

   S  als sendeseitiger Trainingssequenzmatrix,
   F  als sendeseitiger Vorfiltermatrix,
   $V_{Tx}$ als Eigenvektoren einer langzeitstabilen sendeseitigen Korrelationsmatrix mit sendeseitigen Funkkanalkoeffizienten, und mit
   $\Phi_f$ als Diagonalmatrix zur Leistungszuordnung

8. Verfahren nach Anspruch 7, bei dem die Diagonalmatrix $\Phi_f$ unter Berücksichtigung eines MSE-Fehlerwerts $\varepsilon$ anhand folgender Formel gebildet wird:

$$\varepsilon = tr(\Lambda_{Tx}^{-1} \otimes \Lambda_{Rx}^{-1} + \frac{N_t}{N_0} (\Phi_f \Phi_f^{H} \otimes I))^{-1}$$

   mit

   $N_t$ als Trainingssequenzlänge,
   $N_0$ als Rauschleistung,

I  als Einheitsmatrix,

$\Lambda_{Rx}$ als Eigenwerte einer empfangsseitigen langzeitstabilen Korrelationsmatrix mit empfangsseitigen Funkkanalkoeffizienten,

$\Lambda_{Tx}$ als Eigenwerte der sendeseitigen langzeitstabilen Korrelationsmatrix mit sendeseitigen Funkkanalkoeffizienten.

9. Verfahren nach Anspruch 7 oder 8, bei dem eine Minimierung des MSE-Fehlerwerts $\varepsilon$ bei einer sendeseitigen und bei einer empfangsseitigen Korrelation von Funkübertragungskanälen bzw. Antennensystemen im Hinblick auf die Diagonalmatrix $\Phi_f$ anhand folgender Formel durchgeführt wird:

$$\min_{\Phi_f} tr\,(\Lambda_{Tx}^{-1} \otimes \Lambda_{Rx}^{-1} + \frac{N_t}{N_0}(\Phi_f \Phi_f^{H} \otimes I))^{-1}$$

wobei als Nebenbedingung eine Leistungsbeschränkung anhand folgender Formel bestimmt wird:

$$\rho = \sum_{l=0}^{M_{Tx}} \Phi_{f,l}^2$$

10. Verfahren nach Anspruch 7 oder 8, bei dem bei einer sendeseitigen Korrelation von Funkübertragungskanälen bzw. Antennensystemen für Elemente der Diagonalmatrix $\Phi_f$ gilt:

$$\Phi_{f,l} = \left[ \frac{1}{M_{Tx}}((\frac{N_t}{N_0})^{-1} tr(\Lambda_{Tx}^{-1}) + \rho) \cdot I - (\frac{N_t}{N_0})^{-1}\Lambda_{Tx}^{-1} \right]^{0,5}$$

mit der Nebenbedingung $\Phi_{f,l} \geq 0$.

11. Sendestation und/oder Empfangsstation eines Funkkommunikationssystems mit Mitteln, die zur Durchführung des Verfahrens nach einem der Ansprüche 1 bis 10 ausgestaltet sind.

EP 1 503 554 A1

Europäisches
Patentamt

**EUROPÄISCHER RECHERCHENBERICHT**

Nummer der Anmeldung

EP 03 01 7077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | KIESSLING, M.; SPEIDEL, J.; GENG, N.; REINHARDT, M.: "Performance analysis of MIMO maximum likelihood receivers with channel correlation, colored gaussian noise, and linear prefiltering" ICC '03. IEEE INTERNATIONAL CONFERENCE ON COMMUNICATIONS, Bd. 5, 11. - 15. Mai 2003, Seiten 3026-3030, XP002270467 USA * Zusammenfassung * --- | 1-11 | H04L25/03 H04L25/02 |
| X | KIESSLING M ET AL: "Statistical prefiltering for MIMO systems with linear receivers in the presence of transmit correlation" 57TH IEEE SEMIANNUAL VEHICULAR TECHNOLOGY CONFERENCE. VTC 2003 (CAT. NO.03CH37431),JEJU, SOUTH KOREA, Bd. 1, 22. - 25. April 2003, Seiten 267-271, XP002270468 Piscataway, NJ, USA ISBN: 0-7803-7757-5 * Zusammenfassung * --- | 1-11 | |
| X | KIESSLING M ET AL: "Statistical prefiltering for MMSE and ML receivers with correlated MIMO channels" WCNC 2003 IEEE WIRELESS COMMUNICATIONS AND NETWORKING CONFERENCE RECORD (CAT. NO.03TH8659), NEW ORLEANS, LA, USA, 16-20 MARCH 2003, Bd. 2, 16. - 20. März 2003, Seiten 919-924, XP002270469 Piscataway, NJ, USA ISBN: 0-7803-7700-1 * Zusammenfassung * --- | 1-11 | |

**RECHERCHIERTE SACHGEBIETE (Int.Cl.7)**

H04L

-/--

Der vorliegende Recherchenbericht wurde für alle Patentansprüche erstellt

| Recherchenort | Abschlußdatum der Recherche | Prüfer |
|---|---|---|
| DEN HAAG | 16. Februar 2004 | Koukourlis, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

.........................................................
& : Mitglied der gleichen Patentfamilie, übereinstimmendes Dokument

EPO FORM 1503 03.82 (P04C03)

# EP 1 503 554 A1

**Europäisches Patentamt**

## EUROPÄISCHER RECHERCHENBERICHT

*Nummer der Anmeldung*

EP 03 01 7077

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A | WO 01 37442 A (GUSTRAU JOERG ;ULRICH THOMAS (DE); HOEYNCK ANDREAS (DE); KLEIN ANJ) 25. Mai 2001 (2001-05-25) <br> * Zusammenfassung * <br> * Seite 4, Zeile 1 - Zeile 26 * <br> --- | 1-11 | |
| A | SHENGLI ZHOU ET AL: "Subspace-based (semi-) blind channel estimation for block precoded space-time OFDM" <br> IEEE TRANSACTIONS ON SIGNAL PROCESSING, MAY 2002, IEEE, USA, <br> Bd. 50, Nr. 5, Seiten 1215-1228, <br> XP002270470 <br> ISSN: 1053-587X <br> * Zusammenfassung * <br> ----- | 1-11 | |
| | | | **RECHERCHIERTE SACHGEBIETE** (Int.Cl.7) |

Der vorliegende Recherchenbericht wurde für alle Patentansprüche erstellt

| Recherchenort | Abschlußdatum der Recherche | Prüfer |
|---|---|---|
| DEN HAAG | 16. Februar 2004 | Koukourlis, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

13

## ANHANG ZUM EUROPÄISCHEN RECHERCHENBERICHT
## ÜBER DIE EUROPÄISCHE PATENTANMELDUNG NR.

EP 03 01 7077

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-02-2004

| Im Recherchenbericht angeführtes Patentdokument | Datum der Veröffentlichung | Mitglied(er) der Patentfamilie | Datum der Veröffentlichung |
|---|---|---|---|
| WO 0137442 A | 25-05-2001 | DE 19955357 A1<br>AU 2350201 A<br>WO 0137442 A1 | 09-08-2001<br>30-05-2001<br>25-05-2001 |

EPO FORM P0461

Für nähere Einzelheiten zu diesem Anhang : siehe Amtsblatt des Europäischen Patentamts, Nr.12/82